# EUROPÄISCHE PATENTSCHRIFT

(11) **EP 0 479 064 B1**
(45) Veröffentlichungstag und Bekanntmachung des Hinweises auf die Patenterteilung: **29.06.1994**
(21) Anmeldenummer: 91116005.9
(22) Anmeldetag: 20.09.1991
(51) Int. Cl.: B60J 3/02

(54) **Sonnenblende für Fahrzeuge**
Sun visor for vehicles
Pare-soleil pour véhicules

(30) Priorität: 05.10.1990 DE 4031482
(43) Veröffentlichungstag der Anmeldung: 08.04.1992
(73) Patentinhaber: Gebr. Happich GmbH, D-42097 Wuppertal (DE)
(72) Erfinder: Straub, Bernard, F-57150 Creutzwald (FR); Hilt, Gerard, F-57450 Henriville (FR); Hilbert, Bernard, F-57460 Cappel (FR); Lecorvaisier, René, F-57470 Hombourg-Haut (FR); Sauder, Patrick, F-57730 Folschrider (FR); Scheibel, Norbert, F-57150 Creutzwald (FR); Lucas, Alain, F-57220 Boulay (FR); Bristiel, Francois, F-57220 Bambiderstroff (FR); Wewer, Francis, F-57150 Creutzwald (FR); Cholley, Bernard, F-70800 Conflans/Lanterne (FR)

(56) Entgegenhaltungen:
- EP-A- 0 261 989
- EP-A- 0 340 195
- EP-A- 0 351 468
- DE-A- 2 703 447
- DE-A- 2 911 464
- DE-A- 3 338 279
- DE-A- 3 340 068
- DE-C- 2 759 796
- US-A- 4 390 202

## Beschreibung

Die Erfindung bezieht sich auf eine Sonnenblende für Fahrzeuge, im wesentlichen bestehend aus einem plattenförmigen, an einer Breitseite mit einem Spiegel versehenen Sonnenblendenkörper aus Schaumkunststoff mit etwa rechteckiger Kontur, der eine eingelagerte Verstärkungseinlage und in einem Endbereich der oberen Längskante ein eingelagertes Lagergehäuse aufweist, welches mit einer sich etwa parallel zur oberen Längskante erstreckenden Bohrung zur Aufnahme eines Endbereichs einer Sonnenblendenachse ausgebildet ist und der am anderen Endbereich derselben Längskante eine Gegenlagerachse aufweist, die lösbar mit einem an der Fahrzeugkarosserie befestigbaren Gegenlagergehäuse verbunden ist und der schließlich eingelagerte elektrische Leitungsdrähte mit Kontaktelementen für eine Beleuchtungseinrichtung aufweist, wobei zumindest ein Kontaktelement vorgesehen ist, dessen einer Endbereich eine mit der Sonnenblendenachse kontaktierbare Kontaktfeder bildet und dessen anderer Endbereich mit einem elektrischen Leitungsdraht, der direkt oder indirekt zu einem elektrischen Verbraucher hinführt, verbunden ist.

Sonnenblenden für Fahrzeuge werden häufig mit Kosmetikspiegeln und Beleuchtungseinrichtung ausgestattet, um zum Komfort und der Bequemlichkeit der Fahrgäste sowie zur Attraktivität des Fahrzeuginnern beizutragen. Dabei bereitet die elektrische Leitungsführung für die Beleuchtungseinrichtung oftmals erhebliche Schwierigkeiten und einen großen Montageaufwand. Üblicherweise werden die Verbindungsleitungen vom Stromversorgungsnetz eines Fahrzeugs zur Beleuchtungseinrichtung durch die hohl ausgebildete Sonnenblendenachse geführt, wie es z.B. in den DE-A-2 911 464 und DE-A-3 338 279 gezeigt und näher erläutert ist. Bei diesen bekannten Vorbildern ist der zur Stromversorgung der Beleuchtungseinrichtung erforderliche Aufwand sowohl im Hinblick auf die Vielzahl der Einzelteile als auch im Hinblick auf die Vielzahl der erforderlichen Montageschritte beträchtlich und recht kostenintensiv. Hinzu kommt, daß die Funktionstüchtigkeit der elektrischen Einrichtungen nicht zuverlässig erscheint, weil beispielsweise die hohle Sonnenblendenachse aus einem Metallrohr besteht, das an den Enden durch Ablängen bedingte Grate aufweisen kann, durch die die Leiterisolationen beschädigt werden können.

Es ist ferner bekannt, die Sonnenblendenachse elektrisch leitend mit der Karosserie zu verbinden und an der Sonnenblendenachse ein elektrisches Kontaktelement angreifen zu lassen, das durch eine Verbindungsleitung mit der elektrischen Lichtquelle verbunden ist (vgl. z.B. DE-A-2 911 464, US-A-4 390 202). Auf diese Weise läßt sich ein Teil der elektrischen Verdrahtung bei mit einer Lichtquelle ausgerüsteten Sonnenblenden relativ einfach verwirklichen. Bei der Herstellung einer im wesentlichen aus Formschaum bestehenden Sonnenblende, wobei die Verstärkungseinlage mit Lagergehäuse und elektrischer Verdrahtung in eine Schäumform eingesetzt und mit Kunststoffmaterial umschäumt wird, können sich aber Schwierigkeiten ergeben. Durch das Umschäumen können nämlich die an der Sonnenblendenachse angreifenden elektrischen Kontaktelemente verschmutzt oder auch soweit vom Schaummaterial in ihrem Arbeitvermögen beeinträchtigt werden, daß eine unbedingt zuverlässige elektrische Kontaktierung nicht mehr gewährleistet ist.

Die Aufgabe der Erfindung besteht nun, ausgehend von einer Sonnenblende der eingangs genannten Art, darin, eine einfach herzustellende und zu montierende, insbesondere zuverlässige Kontaktierung zwischen zumindest einem Kontaktelement und der Sonnenblendenachse durch besonders einfache und kostengünstige Mittel und Maßnahmen zu erzielen.

Zur Lösung dieser Aufgabe ist bei einer Sonnenblende der eingangs genannten Art, siehe z.B. die DE-A-2 911 464, erfindungsgemäß vorgesehen, daß das Lagergehäuse mit einer etwa rechtwinklig in die Bohrung übergehenden Stecköffnung ausgebildet ist und einen Stopfen aufnimmt, der als Kunststoff-Spritzgußteil ausgebildet ist und das zumindest eine elektrische Kontaktelement durch Umspritzen trägt, dessen einer den Stopfen einendig überragender Endbereich die mit der Sonnenblendenachse kontaktierbare Kontaktfeder bildet und dessen anderer, den Stopfen anderendig überragender Endbereich mit dem elektrischen Leitungsdraht, verbunden ist.

Durch diese erfindungsgemäße Maßnahme ist sichergestellt, daß das zumindest eine Kontaktelement gegen jegliche Beschädigung und Verschmutzung geschützt in der Stecköffnung des Lagergehäuses aufgenommen ist. Auch ist das zumindest eine Kontaktelement durch den Stopfen weitgehend gegen Beschädigungen geschützt und durch das Umspritzen lagesicher gehalten. Die Ausbildung einer Stecköffnung im Lagergehäuse bereitet keine Schwierigkeiten oder Mehrkosten, während die Mehrkosten, die durch die Herstellung des Stopfens entstehen, vernachlässigbar gering sind, zumal nunmehr das Kontaktelement einfacher als bisher gestaltet werden kann, so daß sich insoweit ein Kostenausgleich ergibt. Die Montage des Stopfens bzw. das Einpressen desselben in die Stecköffnung bereitet keine Mühe und ist einfach und schneller durchzuführen als das frühere Auffädeln der U-förmig gestalteten Kontaktelemente.

In Ausgestaltung der Erfindung ist vorgesehen, daß das im Stopfen sitzende Kontaktelement aus einem Streifen aus elektrisch gut leitendem Material, wie Buntmetall besteht, von dem ein Endbereich zwecks Bildung der Kontaktfeder um etwa 180 ° so zurückgebogen ist, daß zwischen der Basis des Streifens und der Kontaktfeder ein Abstand verbleibt und daß zwischen dem Stopfen und der Stecköffnung Führungsmittel vorgesehen sind, um sicherzustellen, daß die Flachseite der Kontaktfeder parallel zur Sonnenblendenachse ausgerichtet ist und an dieser unter Federspannung zur Anlage gelangen kann.

Durch diese Maßnahme ergibt sich eine besonders einfache und kostengünstige Gestaltung des Kontaktelements und eine Erleichterung bei der Montage des Stopfens bedingt durch die Führungsmittel. Als Führungsmittel können vorzugsweise ein am Stopfen oder am Rand der Stecköffnung befindlicher Zapfen und eine am jeweils anderen Teil vorgesehene Zapfenaufnahme dienen.

Gemäß einer bevorzugten Ausgestaltung der Erfindung ist vorgesehen, daß zumindest der sich parallel zur oberen Längskante des Sonnenblendenkörpers eng benachbart erstreckende Bereich der Einlage eine spritzgegossene Kunststoffschiene ist, die einendig als Lagergehäuse mit einer Bohrung für die Sonnenblendenachse und einer Stecköffnung für den das Kontaktelement tragenden Stopfen und anderendig mit der Gegenlagerachse einstückig ausgebildet ist. Diese Ausbildung trägt der Forderung nach einer einfachen und kostengünstigen Herstellung Rechnung.

Gemäß einer weiteren bevorzugten Ausgestaltung der Erfindung trägt die Gegenlagerachse ein zweites, mit einem elektrischen Leitungsdraht verbundenes elektrisches Kontaktelement, das mit einem im Gegenlagergehäuse befindlichen Gegenkontakt kontaktierbar ist und die elektrischen Leitungsdrähte des ersten und zweiten Kontaktelements sind innerhalb des Sonnenblendenkörpers zu einem elektrischen Verbraucher, wie eine im Sonnenblendenkörper integrierte Beleuchtungseinrichtung oder zu einem Schalter, über den das Ein- oder Ausschalten einer Beleuchtungseinrichtung erfolgen kann, geführt.

Wenn von der Ausführungsform Gebrauch gemacht wird, ein erstes Kontaktelement im Bereich der Sonnenblendenachse und ein zweites Kontaktelement im Bereich der Gegenlagerachse anzuordnen, so ergeben sich verschiedene Ausgestaltungsformen für die neue Sonnenblende. So ist es möglich, eine Beleuchtungseinrichtung im Sonnenblendenkörper zu integrieren, wobei der Masseleiter an der Sonnenblendenachse angreift und der mit der Fahrzeugelektrik kontaktierbare Stromzuführungsleiter mit der Gegenlagerachse kontaktiert. Dabei lassen sich, etwa entsprechend der Lehre der DE-C-2 759 796 auch Maßnahmen treffen, wonach die Beleuchtungseinrichtung nur in der heruntergeklappten Lage des Sonnenblendenkörpers mit elektrischem Strom versorgt wird. Eine weitere vorteilhafte Möglichkeit besteht darin, die Beleuchtungseinrichtung von der Sonnenblende beabstandet im Himmelbereich eines Fahrzeugs anzuordnen und die Sonnenblende nur für die Schaltfunktion der Beleuchtungseinrichtung zu benutzen. In diesem Fall sollte nur der Masseleiter mit seinen Kontakten an der Sonnenblendenachse und an der Gegenlagerachse im Sonnenblendenkörper angeordnet sein, wobei die Schaltfunktion durch einen, den elektrischen Leitungsdraht unterbrechenden Mikroschalter übernommen wird, der durch eine Spiegelabdeckung in Form einer Klappe oder eines Schiebers zu betätigen ist.

Die Erfindung schließt selbstverständlich auch die Möglichkeit ein, den Stopfen mit zwei Kontaktelementen für einen Stromzuführungsleiter und einen Masseleiter zu bestücken. In diesem Fall empfiehlt sich die Verwendung einer Sonnenblendenachse, die als Kunststoff-Spritzgußteil mit einer darin durch Umspritzen eingelagerten, mit ihren freien Enden aus den Stirnenden der Sonnenblendenachse heraustretenden Leiterplatte mit elektrisch leitfähigen Bahnen ausgebildet und näher in den Unterlagen der Patentanmeldung DE-A-3 932 808 beschrieben ist.

Ein Ausführungsbeispiel der Erfindung wird im folgenden anhand der Zeichnung näher erläutert. Es zeigen
- Fig. 1: eine Sonnenblende in Draufsicht,
- Fig. 2: die Verstärkungseinlage der Sonnenblende nach Fig. 1 und
- Fig. 3: eine Einzelheit der Sonnenblende.

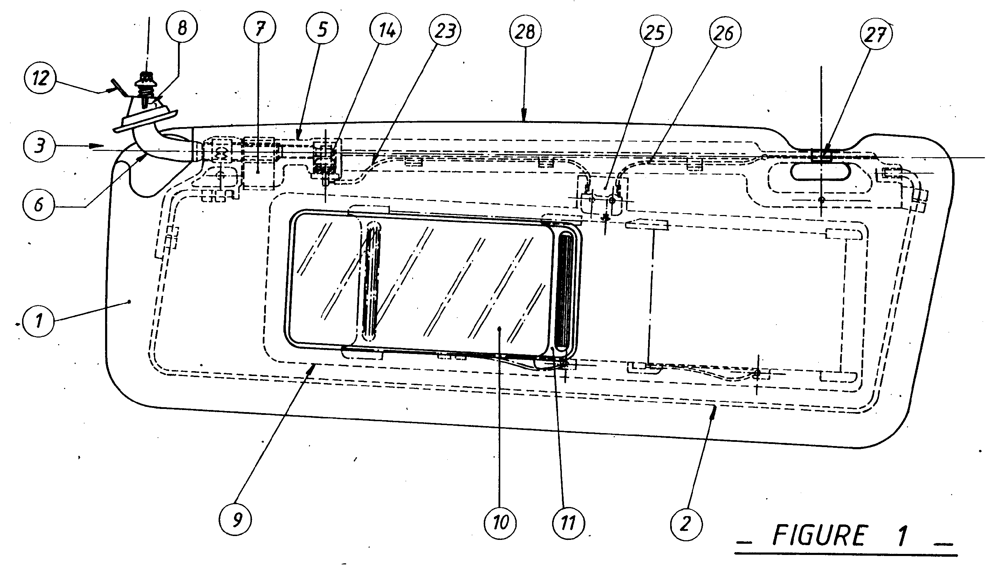

Fig. 1 zeigt eine Fahrzeugsonnenblende mit einem Sonnenblendenkörper 1, der aus einem Polstereigenschaften aufweisenden Material (Schaumkunststoff) besteht und durch eine eingelagerte, zu einem Rahmen geformte Einlage 2 ausgesteift ist. Zur schwenkbeweglichen Anordnung des Sonnenblendenkörpers 1 in einem Fahrzeug ist ein Drehlager 3 und eine mit einem nicht gezeigten Gegenlagerböckchen zusammenwirkende Gegenlagerachse 4 vorgesehen.

Das Drehlager 3 besteht im einzelnen aus einem Drehlagergehäuse 5, einer Sonnenblendenachse 6, die L-förmig gestaltet ist und einer den langen Schenkel der Sonnenblendenachse 6 radial klemmenden, U-förmig ausgebildeten Rastfeder 7. Der kurze Schenkel der Sonnenblendenachse 6 ist drehbeweglich in einem an einer Fahrzeugkarosserie befestigbaren Lagerböckchen 8 gelagert, so daß der Sonnenblendenkörper 1 auch zu einer Fahrzeugseitenscheibe hin geschwenkt werden kann.

Der Sonnenblendenkörper 1 trägt einen in einem Gehäuse 9 angeordneten Spiegel 10, der durch einen Schieber 11 bei Nichtgebrauch abgedeckt werden kann. Zur Sonnenblende gehört weiterhin eine nicht dargestellte Beleuchtungseinrichtung, die wahlweise vom Sonnenblendenkörper 1 beabstandet, z.B. im Fahrzeughimmel oder im Sonnenblendenkörper 1 untergebracht ist. Im letzteren Fall kann eine Anordnung getroffen und eine Ausbildung vorgesehen sein, wie sie z.B. in der DE-A-2 703 447 oder in den Unterlagen der Patentanmeldung DE-A-3 932 808 gezeigt und beschrieben ist.

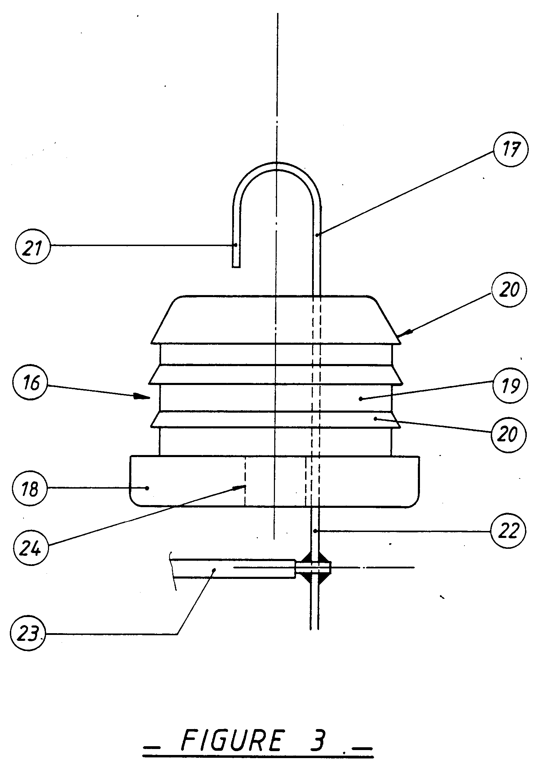

Die elektrische Stromversorgung der Beleuchtungseinrichtung erfolgt über die allgemeine Fahrzeugelektrik, d. h., die Beleuchtungseinrichtung ist mit dem Stromversorgungsnetz eines Fahrzeugs verbindbar. Im Ausführungsbeispiel ist die Sonnenblendenachse 6 als massive Stahlachse ausgebildet. Diese trägt einen mit der Fahrzeugkarosserie in geeigneter Weise zu verbindenden Kontakt 12. Der lange, in einer Bohrung 13 des Drehlagergehäuses 5 aufgenommene Schenkel der Sonnenblendenachse 6 weist einen freien, im Durchmesser verjüngten Endbereich 14 auf, der in einer Spitze endet. Der Endbereich 14 mündet in einer Stecköffnung 15 im Drehlagergehäuse, welche ihrerseits etwa rechtwinklig in die Bohrung 13 übergeht. Die Stecköffnung 15 dient zur Aufnahme eines in Fig. 3 näher dargestellten Stopfens 16, der als Kunststoff-Spritzgußteil ausgebildet ist und ein elektrisches Kontaktelement 17 durch Umspritzen haltert. Der Stopfen 16 ist mit einem sich gegen den Rand der Stecköffnung 15 abstützenden Flansch 18 und an seinem in die Stecköffnung 15 eindringenden Schaft 19 mit ringförmig umlaufenden, sägezahnartigen Vorsprüngen oder Wülsten 20 versehen, um die Festlegung des in die Stecköffnung eingepreßten Stopfens 16 zu sichern. Das vom Stopfen 16 gehalterte Kontaktelement 17 weist einen ersten, den Stopfen 16 einendig überragenden Endbereich auf, der eine mit der Sonnenblendenachse 6 bzw. deren Endbereich 14 kontaktierbare Kontaktfeder 21 bildet. Das im Stopfen 16 sitzende Kontaktelement besteht aus einem Streifen aus elektrisch gut leitendem Material, wie Buntmetall, von dem ein Endbereich zwecks Bildung der Kontaktfeder 21 um etwa 180 ° so zurückgebogen ist, daß zwischen der Basis des Streifens und der Kontaktfeder 21 ein Abstand verbleibt. Ferner weist das Kontaktelement 17 einen zweiten, den Stopfen 16 anderendig überragenden Endbereich 22 auf, an dem ein elektrischer Leitungsdraht 23, der mit einer Isolation überzogen ist, angeschlossen ist. Der Anschluß kann über eine Krimp- und/oder durch eine Lötverbindung erfolgen. Das Kontaktelement 17 ist derart im Stopfen 16 eingelagert, daß eine federnde Anlage der Kontaktfeder 21 an der Sonnenblendenachse sichergestellt ist. Eine Fehlmontage des Stopfens 16 wird dadurch ausgeschlossen, daß der Flansch 18 eine Ausnehmung 24 aufweist, in die ein nichtgezeigter Vorsprung am Rand der Stecköffnung 15 passend eingreift.

Der elektrische Leitungsdraht 23 ist zu einem Mikroschalter 25 geführt, von dem ein weiterer Leitungsdraht 26 abgeht, dessen Endbereich innerhalb der Gegenlagerachse 4 endet und hier mit einem zweiten elektrischen Kontaktelement 27 verbunden ist, das mit einem nicht gezeigten, im Gegenlagergehäuse angeordneten Gegenkontakt kontaktiert. Der Mikroschalter 25 besitzt einen Kontaktfühler, der mit dem Schieber 11 so zusammenarbeitet, daß der Stromkreis für die Beleuchtungseinrichtung geschlossen ist, wenn sich der Schieber in seiner geöffneten Position befindet bzw. unterbrochen ist, wenn der Schieber 11 sich in seiner den Spiegel 10 verdeckenden Position befindet.

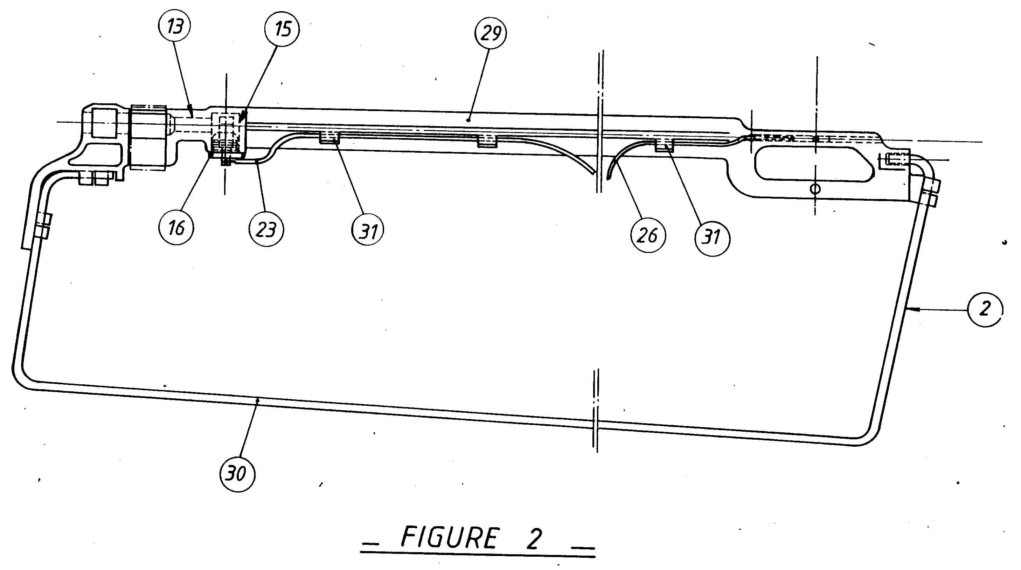

Wie insbesondere Fig. 2 zeigt, ist der sich parallel zur oberen Längskante 28 des Sonnenblendenkörpers 1 eng benachbart erstreckende Bereich der Einlage 2 eine spritzgegossene Kunststoffschiene 29. Die Einlage 2 wird durch einen etwa U-förmig gestalteten Drahtbügel 30, der klipsartig mit der Kunststoffschiene 29 verbunden ist, ergänzt. Die Kunststoffschiene 29 ist einendig, auf der Zeichnung linksseitig, als Lagergehäuse 5 mit der Bohrung 13 für die Sonnenblendenachse 6 und der Stecköffnung 15 für den das Kontaktelement 17 tragenden Stopfen 16 und anderendig mit der Gegenlagerachse 4 einstückig ausgebildet. Die Stecköffnung 15 befindet sich in einer gehäuseartigen Verbreiterung des Lagergehäuses 5, die im wesentlichen rund ausgebildet ist. An der Kunststoffschiene 29 angeformte Klipselemente 31 ermöglichen eine saubere Verlegung der Leitungsdrähte 23 und 26.
- 1: Sonnenblendenkörper
- 2: Einlage
- 3: Drehlager
- 4: Gegenlagerachse
- 5: Drehlagergehäuse
- 6: Sonnenblendenachse
- 7: Rastfeder
- 8: Lagerböckchen
- 9: Gehäuse
- 10: Spiegel
- 11: Schieber
- 12: Kontakt
- 13: Bohrung
- 14: Endbereich
- 15: Stecköffnung
- 16: Stopfen
- 17: Kontaktelement
- 18: Flansch
- 19: Schaft
- 20: Wülste
- 21: Kontaktfeder
- 22: Endbereich
- 23: Leitungsdraht
- 24: Ausnehmung
- 25: Mikroschalter
- 26: Leitungsdraht
- 27: Kontaktelement
- 28: Längskante
- 29: Kunststoffschiene
- 30: Drahtbügel
- 31: Klipselement

## Patentansprüche

1. Sonnenblende für Fahrzeuge, im wesentlichen bestehend aus einem plattenförmigen, an einer Breitseite mit einem Spiegel (10) versehenen Sonnenblendenkörper (1) aus Schaumkunststoff mit etwa rechteckiger Kontur, der eine eingelagerte Verstärkungseinlage (2) und in einem Endbereich der oberen Längskante (28) ein eingelagertes Lagergehäuse (5) aufweist, welches mit einer sich etwa parallel zur oberen Längskante erstreckenden Bohrung (13) zur Aufnahme eines Endbereichs einer Sonnenblendenachse (6) ausgebildet ist und der am anderen Endbereich derselben Längskante (28) eine Gegenlagerachse (4) aufweist, die lösbar mit einem an der Fahrzeugkarosserie befestigbaren Gegenlagergehäuse verbunden ist und der schließlich eingelagerte elektrische Leitungsdrähte (23, 26) mit Kontaktelementen (17, 27) für eine Beleuchtungseinrichtung aufweist, wobei zumindest ein Kontaktelement (17) vorgesehen ist, dessen einer Endbereich eine mit der Sonnenblendenachse (6) kontaktierbare Kontaktfeder (21) bildet und dessen anderer Endbereich (22) mit einem elektrischen Leitungsdraht (23), der direkt oder indirekt zu einem elektrischen Verbraucher hinführt, verbunden ist, dadurch gekennzeichnet, daß das Lagergehäuse (5) mit einer etwa rechtwinklig in die Bohrung (13) übergehenden Stecköffnung (15) ausgebildet ist und einen Stopfen (16) aufnimmt, der als Kunststoff-Spritzgußteil ausgebildet ist und das zumindest eine elektrische Kontaktelement (17) durch Umspritzen trägt, dessen einer den Stopfen (16) einendig überragender Endbereich die mit der Sonnenblendenachse (6) kontaktierbare Kontaktfeder (21) bildet und dessen anderer, den Stopfen (16) anderendig überragender Endbereich (22) mit dem elektrischen Leitungsdraht (23) verbunden ist.

2. Sonnenblende nach Anspruch 1, dadurch gekennzeichnet, daß das im Stopfen (16) sitzende Kontaktelement (17) aus einem Streifen aus elektrisch gut leitendem Material, wie Buntmetall besteht, von dem ein Endbereich zwecks Bildung der Kontaktfeder (21) um etwa 180 ° so zurückgebogen ist, daß zwischen der Basis des Streifens und der Kontaktfeder (21) ein Abstand verbleibt und daß zwischen dem Stopfen (16) und der Stecköffnung (15) Führungsmittel (24) vorgesehen sind, um sicherzustellen, daß die Flachseite der Kontaktfeder (21) parallel zur Sonnenblendenachse (6) ausgerichtet ist und an dieser unter Federspannung zur Anlage gelangen kann.

3. Sonnenblende nach Anspruch 1 oder 2, dadurch gekennzeichnet, daß zumindest der sich parallel zur oberen Längskante (28) des Sonnenblendenkörpers (1) eng benachbart erstreckende Bereich der Einlage (2) eine spritzgegossene Kunststoffschiene (29) ist, die einendig als Lagergehäuse (5) mit einer Bohrung (13) für die Sonnenblendenachse (6) und einer Stecköffnung (15) für den das Kontaktelement (17) tragenden Stopfen (16) und anderendig mit der Gegenlagerachse (4) einstückig ausgebildet ist.

4. Sonnenblende nach wenigstens einem der Ansprüche 1 bis 3, dadurch gekennzeichnet, daß die Gegenlagerachse (4) ein zweites, mit einem elektrischen Leitungsdraht (26) verbundenes elektrisches Kontaktelement (27) trägt, das mit einem im Gegenlagergehäuse befindlichen Gegenkontakt kontaktierbar ist und daß die elektrischen Leitungsdrähte (23) des ersten und zweiten Kontaktelements (17 bzw. 27) innerhalb des Sonnenblendenkörpers (1) zu einem elektrischen Verbraucher, wie eine im Sonnenblendenkörper integrierte Beleuchtungseinrichtung oder zu einem Schalter (25), über den das Ein- oder Ausschalten einer Beleuchtungseinrichtung erfolgen kann, geführt sind.

## Claims

1. A sun visor for vehicles, comprising in the main a lamellar sun visor body (1), of plastics material foam and of approximately rectangular shape, provided on one wide side with a mirror (10), the said sun visor body (1) containing a reinforcing insert (2) as well as a bearing housing (5) contained in one end region of the upper longitudinal edge (28), the said bearing housing (5) provided with a bore (13) extending approximately parallel to the upper longitudinal edge to accommodate one end region of a sun visor axle (6) and with an end support axle (4) on the other end region of the same longitudinal edge (28), whereby the said end support axle (4) is detachably connected to an end support housing which may be secured to the vehicle body and at its end carries electrically-conducting wires (23, 26) with contact elements (17, 27) for an illumination device, whereby at least one contact element (17) has one end region forming a contact spring (21) which may contact with the sun visor axle (6) with its other end region (22) connected to an electrically-conducting wire (23) which leads directly or indirectly to current-consuming apparatus, characterised in that the bearing housing (5) is provided with an approximately rectangular plug-in aperture (15) which leads into the bore (13) to accommodate a plug (16) which is manufactured as a plastics material injection-moulded part and which bears at least one electrical contact element (17) encapsulated through injection moulding, whereby one end region projecting beyond one end of the plug (16) forms the contact spring (21) which contacts with the sun visor axle (6) and the other end region (22) projecting beyond the other end region of the plug (16) is connected to the electrically-conducting wire (23).

2. A sun visor according to claim 1, characterised in that the contact element (17) in the plug (16) is a strip of material which is a good electrical conductor, such as non-ferrous metal, one end region of which is turned back through approximately 180° to form the contact spring (21) such that a space remains between the base of the strip and the contact spring (21) and that a guide element (24) is provided between the plug (16) and the plug-in aperture (15) to ensure that the flat side of the contact spring (21) is aligned parallel to the sun visor axle (6) and can rest against it under the tension of a spring.

3. A sun visor according to either claim 1 or claim 2, characterised in that at least that region of the insert (2) which extends parallel to, and is adjacent to, the upper longitudinal edge (28) of the sun visor body (1) is an injection-moulded plastics material rail (29), one end of which serves as a bearing housing (5) with a bore (13) for the sun visor axle (6) and with a plug-in aperture (15) for the plug (16) bearing the contact element (17), and the other end of which is integral with the end support axle (4).

4. A sun visor according to at least one of claims 1 to 3, characterised in that the end support axle (4) bears a second electrical contact element (27) connected to an electrically-conducting wire (26) which can be contacted to a counter-contact in the end support housing and that the electrically-conducting wires (23) of the first and second contact elements (17 or 27) are routed within the sun visor body (1) to a current-consuming apparatus, such as an illumination device integrated into the sun visor body, or to a switch (25) by means of which an illumination device can be switched on or off.

## Revendications

1. Pare-soleil pour véhicules, constitué essentiellement par un corps de pare-soleil (1) en mousse synthétique en forme de plaque et muni sur un côté large d'un miroir (10), à contour sensiblement rectangulaire, et qui comprend une garniture de renforcement incorporée et un logement formant palier incorporé dans une région d'extrémité du bord longitudinal supérieur (2), logement qui est constitué par un alésage (13) s'étendant sensiblement parallèlement au bord longitudinal supérieur et destiné à la réception d'une région d'extrémité d'un axe de support (6) et qui comprend dans l'autre région d'extrémité du même bord longitudinal (28) un contre-axe de support (4) qui est relié de façon amovible à un contre-logement formant palier pouvant être fixé à la carrosserie du véhicule, et qui contient finalement des fils électriques conducteurs (23, 26) incorporés avec des éléments de contact (17, 27) pour un dispositif d'éclairage, un élément de contact (17) au moins étant prévu, dont une région d'extrémité forme un ressort de contact (21) pouvant venir en contact avec l'axe (6) du pare-soleil et dont l'autre région d'extrémité (22) est reliée à un fil électrique conducteur (23) qui va directement ou indirectement à l'appareil électrique utilisateur, caractérisé en ce que le logement formant palier (5) est constitué par une ouverture d'insertion raccordée sensiblement à angle droit avec l'alésage (13) et comprend un bouchon (16) constitué sous forme d'un élément en matière synthétique moulée par injection, supportant au moins un élément de contact électrique (17) enrobé lors du moulage par injection, dont une région d'extrémité qui est en saillie à une extrémité au-delà du bouchon (16) forme un ressort de contact (21) qui peut venir en contact avec l'axe (6) du pare-soleil et dont l'autre région d'extrémité (22) qui sort du bouchon (16) à l'autre extrémité est reliée au fil conducteur électrique (23).

2. Pare-soleil selon la revendication 1, caractérisé en ce que l'élément de contact (17) qui est monté sur le bouchon (16) est constitué par une bande d'un matériau électriquement bon conducteur tel qu'un métal non-ferreux, dont une extrémité est repliée sur elle-même sur sensiblement 180° pour former le ressort de contact (21), en ce qu'un intervalle est ménagé entre la base de la bande et le ressort de contact (21), et en ce que des moyens de guidage (24) sont prévus entre le bouchon (16) et l'ouverture d'insertion (15) pour être certain que le côté plat du ressort de contact (21) est parallèle à l'axe (6) du pare-soleil et peut parvenir en appui sur celui-ci sous une sollicitation élastique.

3. Pare-soleil selon la revendication 1 ou 2, caractérisé en ce qu'au moins la région de la garniture (2) qui s'étend parallèlement au bord longitudinal supérieur (28) du corps de pare-soleil (1) en en étant étroitement voisine est constituée par une bande (29) en matière synthétique moulée par injection, constituée d'un seul tenant à une extrémité sous forme d'un logement formant palier (5) avec un alésage (13) pour l'axe (6) du pare-soleil et une ouverture d'insertion (15) pour le bouchon (16) qui supporte l'élément de contact (17), et à l'autre extrémité par le contre-axe de support (4).

4. Pare-soleil selon au moins l'une des revendications 1 à 3, caractérisé en ce que le contre-axe de support (4) supporte un second élément de contact électrique (27) relié à un fil électriquement conducteur (26), élément qui peut être amené en contact avec un contre-contact prévu dans le contre-logement formant palier et les fils électriquement conducteurs (17 ou 27) des premier et second éléments de contact sont reliés à l'intérieur du corps (1) du pare-soleil avec un appareil utilisateur électrique tel qu'un dispositif d'éclairage intégré dans le corps du pare-soleil, ou avec un commutateur (25) par lequel il est possible d'allumer ou d'éteindre un dispositif d'éclairage.
